# EUROPÄISCHE PATENTSCHRIFT

(11) **EP 0 944 223 B1**
(45) Veröffentlichungstag und Bekanntmachung des Hinweises auf die Patenterteilung: **31.08.2005**
(21) Anmeldenummer: 99105565.8
(22) Anmeldetag: 18.03.1999
(51) Int. Cl.: H04M 3/22, H04M 3/42

(54) **Fernadministration eines Telekommunikationssystems**
Remote administration of a telecommunicationsystem
Gestion à distance d'un système de télécommunication

(30) Priorität: 18.03.1998 DE 19811841
(43) Veröffentlichungstag der Anmeldung: 22.09.1999
(73) Patentinhaber: SIEMENS AKTIENGESELLSCHAFT, 80333 München (DE)
(72) Erfinder: Henniger, Andreas, 45239 Essen (DE); Schwartze, Jürgen, 44227 Dortmund (DE); Schnapka, Frank, 44267 Dortmond (DE)

(56) Entgegenhaltungen:
- EP-A- 0 644 483
- DE-A- 4 418 231
- DE-A- 4 441 357

## Beschreibung

Die Erfindung betrifft eine Fernadministration eines Telekommunikationssystems.

Ein Telekommunikationssystem benötigt für seinen Betrieb eine interne Datenbasis, die Informationen über Zuweisungen von Endgeräten zu internen Nummern oder Adressen, besondere Funktionen von Endgeräten, Rufumleitungen, Rufnummernregister etc. enthält. Diese Datenbasis muß bei Änderungen an dem Telekommunikationssystem, beispielsweise durch Änderung der Teilnehmer, Vergrößerung des Systems, Anschalten neuer Endgeräte etc. entsprechend angepaßt und abgeändert werden. Um diese Anpassung der Datenbasis auf einer rationalen Basis durchführen zu können, ist eine Fernadministration wünschenswert, um beispielsweise über ein Servicezentrum des Herstellers oder des Betreibers der Telekommunikationsanlage die Änderungen durchführen zu können.

Zur Fernmanipulation der Datenbasis sind im wesentlichen zwei Varianten bekannt. In der ersten Variante wird die gesamte Datenbasis der Telekommunikationsanlage zu einem, beispielsweise über ein Netz angeschlossenen PC transferiert und über ein entsprechendes Service-Tool wird die Änderung der Datenbasis vorgenommen. Die abgeänderte, an die neuen Begebenheiten angepaßte Datenbasis wird dann wieder in das Telekommunikationssystem zurückgespielt. Nachteilig bei diesem Verfahren sind die benötigten relativ langen Transferzeiten der Datenbasis über das Netz.

Eine weitere, übliche Möglichkeit ist die Schaffung einer umfassenden Administrationsschnittstelle in dem Telekommunikationssystem eigens für die Administration über ein anzuschaltendes Terminal oder dergleichen. Nachteilig hierbei ist der erhöhte Speicherbedarf des Telekommunikationssystems.

Die Schrift DE 44 18 231 Al "Modular strukturierter Service Personal Computer" zeigt eine Vorrichtung zur Fernwartung eines Telekommunikationssystems. Dabei ist ein Telekommunikationssystem mit einer speziellen Datenschnittstelle für Wartungszwecke ausgestattet, beispielsweise eine SCSI-Schnittstelle. An diese Schnittstelle wird ein PersonalComputer (PC) angeschlossen, der mit einer speziellen Software für Wartungszwecke ausgestattet ist. Diese Software ist mit einer Benutzeroberfläche ausgestattet, an der Angaben und Informationen über die Kommunikationsanlage abgerufen werden können, und mit der durch Eingaben Änderungen an der Konfiguration des Telekommunikationssystems vorgenommen werden können. Die Software setzt die Eingaben des Benutzers in eine spezielle, dem jeweiligen Typ des Telekommunikationssystems angepasste Befehlsfolge um und übermittelt diese Befehle an die beschriebene Datenschnittstelle des Telekommunikationssystems. Die Software des zur Administration eingesetzten Personal-Computers (PC) ist dabei modular aufgebaut, um eine je nach Erfordernis unterschiedliche Benutzeroberfläche darstellen zu können und um den verschiedenen technischen Erfordernissen unterschiedlicher Typen von Telekommunikationssystemen Rechnung zu tragen.

Ferner zeigt die Druckschrift EP-A-0 644 483 "Computer System and Method for Performing multiple tasks" ein Computer-System mit mehreren Applikationen. Dabei ist in dem Computer-System eine virtuelle Datenstation (virtual terminal manager) vorgesehen, der sich gegenüber einer oder mehreren Anwendungen als jeweils eine Datenstation präsentiert. Jede dieser virtuellen Datenstationen tauscht wahlweise oder wechselweise mit externen realen Datenstationen oder mit Programmen, die reale Datenstationen simulieren, Informationen aus. Die gezeigte Anordnung ist dazu bestimmt, mehrere Sitzungen ("sessions") für solche Anwendungen zu koordinieren, die lediglich eine einzige Benutzerschnittstelle aufweisen.

Der Erfindung liegt daher die Aufgabe zugrunde, eine schnelle Manipulation der Datenbasis einer in Betrieb befindlichen Telekommunikationsanlage ohne Vergrößerung der Hardware-Resourcen zu schaffen.

Die Aufgabe wird durch die Merkmale des Anspruchs 1 gelöst. Bevorzugte Ausführungsformen der Erfindung sind Gegenstand der Unteransprüche.

Gemäß der Erfindung ist in einem Telekommunikationssystem mit einer Fernadministration ein virtuelles, d.h. im Sinne dieser Erfindung durch Software nachgebildetes, Endgerät mit den Eigenschaften eines administrationsberechtigten Endgerät oder Teilnehmer definiert und der Datenstrom zu und von dem virtuellen Endgerät wird auf einen an das Telekommunikationssystem angeschlossenen Fern-Rechner umgeleitet. Der Fern-Rechner wird vorzugsweise durch einen PC realisiert.

Vorzugsweise ist das virtuelle Endgerät an einem virtuellen Port angeschlossen, der sich auf einer virtuellen Baugruppe definiert, wobei die virtuelle Baugruppe in einem virtuellen Slot angeordnet ist. Dadurch werden vorteilhafterweise keine zusätzlichen Hardware-Resourcen benötigt.

Um dem Benutzer einen möglichst einfachen Zugang zu dem Telekommunikationssystem zu geben, ist erfindungsgemäß auf dem Fern-Rechner ein Meldungsinterpreter und ein Emulator der Oberfläche des administrationsberechtigten Endgerätes realisiert.

Der Meldungsverkehr zwischen dem virtuellen Port und dem Telekommunikationssystem wird zu einer Datenschnittstelle des Systems umgeleitet. Dabei können als Datenschnittstellen des Telekommunikationssystems ein V.24 Port, ein analoges Modem oder eine digitale ISDN-Karte dienen.

Die Erfindung wird nachfolgend anhand der Zeichnungen erläutert.
- Figur 1: zeigt ein Blockschaltbild der Einbindung einer Applikation "Online" ONL in die Anrufbehandlung eines Telekommunikationssystems,
- Figur 2: zeigt den Ablauf eines seitens des Fern-Rechners initialisierten LOGON-Vorgangs zum Initialisieren der Fernadministration,
- Figur 3: zeigt den Ablauf des Datentransfers zwischen der Telekommunikationsanlage und dem Fern-Rechner während der Fernadministration, und
- Figur 4: zeigt den Ablauf eines seitens des Fern-Rechners initialisierten LOGOFF-Vorgangs zum Beenden der Fernadministration, .
- Figur 5: zeigt eine Darstellung der Emulation eines administrationsberechtigten Endgeräts auf einem FernRechner.

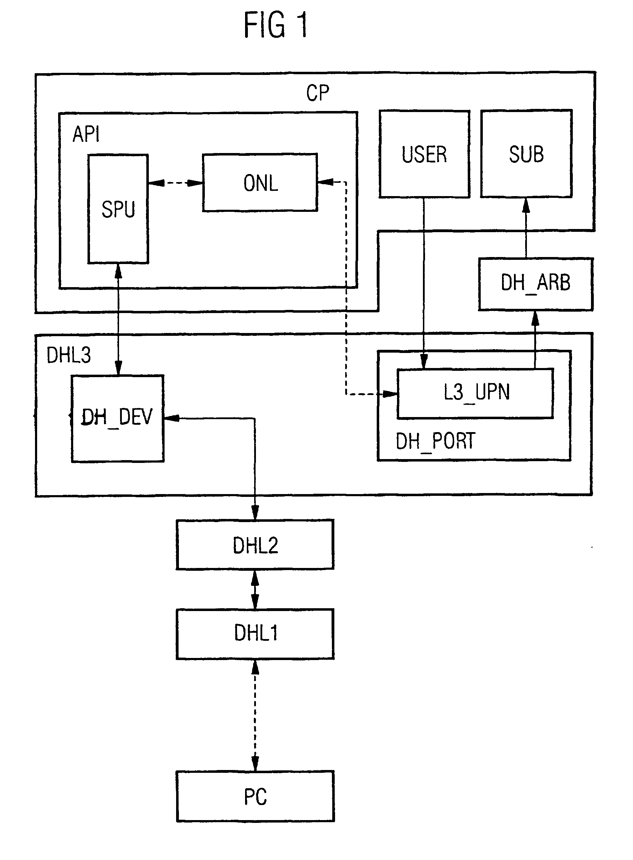

Fig. 1 zeigt in der Form eines Blockschaltbildes die Einbindung einer Applikation ONL in die Anrufbehandlung CP ("callprocessing") eines Telekommunikationssystems, die den Meldungsverkehr zwischen einem Fern-Rechner PC und dem Telekommunikationssystem bzw. den Weg von Signalen oder Meldungen von oder zu dem Fern-Rechner PC durch die OSI-Schichten des Telekommunikationssystems managt. Über eine Verbindung, wie beispielsweise eine ISDN-Verbindung, ist der Fern-Rechner PC an den Gerätetreiber (der Begriff "Gerätetreiber" hat hierbei die gleiche Bedeutung wie der englischsprachige Begriff "device-handler") Schicht-1 DHL1 an das Telekommunikationssystem angeschlossen. Unter den hier genannten Schichten werden Schichten des OSI-Schichtenmodells verstanden. Der Gerätetreiber Schicht-1 DHL1 tauscht Daten mit einem Gerätetreiber Schicht-2 DHL2 aus, der wiederum mit einem Gerätetreiber Schicht-3 DHL3 der dritten OSI-Schicht in Verbindung steht.

Eine Komponente des dritten Gerätetreibers DHL3 ist das Modul DH_DEV (Gerätetreiber der Geräte), das für die Verwaltung der externen Anschlüsse wie beispielsweise ISDN und V24 zuständig ist. Das Modul DH_DEV kommuniziert mit einem Modul SPU (SPU = Session and Presentation Unit) in der fünften OSI-Schicht, das eine Komponente des Moduls API (API = Application Interface) ist, wobei das Modul API ein Bestandteil die Anrufbehandlung CP des Telekommunikationssystems ist. Das Modul SPU hat die Funktion eines Verteilers, d.h. es wertet eine von dem Modul DH_DEV empfangene Meldung insofern aus, indem es analysiert, an welches Modul die empfangene Meldung gesendet werden soll. Ergibt die Analyse, daß die empfangene Meldung an ein Modul ONL (Online) adressiert ist, so wird die entsprechende Meldung an das Modul ONL weitergeleitet. Dieses Modul ONL kommuniziert mit einem Gerätetreiber L3_UPN, der in der dritten OSI-Schicht ein Bestandteil des Gerätetreibers DH_PORT für die Ports des Telekommunikationssystems ist. Das Modul L3_UPN ist der Gerätetreiber für digitale, menügeführte Endgeräte, während der Gerätetreiber DH_PORT allgemein für die Ports die physikalischen Adressen der Anschlüsse der Telekommunikationsendgeräte realisiert.

Beispielsweise sind in einigen Telekommunikationssystemen 500 Ports, d.h. Anschlüsse für Fernsprecher o.ä., realisiert. Um die Kommunikation mit dem Fern-Rechner PC störungsfrei von den tatsächlich vorhandenen physikalischen Ports zu realisieren, wird die Anzahl der Ports um "1" erhöht, beispielsweise bei einer Anlage mit 500 Ports also um "1" auf die Port-Nummer 501. Das Modul L3_UPN umfaßt daher in dem Gerätetreiber DH_PORT auch das zusätzliche Port mit der Nummer 501, das im Beispiel der virtuelle Port ist.

Die Schnittstelle L3_UPN empfängt Meldungen des Moduls USER die Anrufbehandlung CP, wobei das Modul USER für die Behandlung von am Endgerät darzustellender Menüs zuständig ist. Ferner sendet die Schnittstelle L3_UPN Daten des Fern-Rechner PC über einen Puffer DH_ARB an das Modul SUB (SUB = Subscriber) der Anrufbehandlung CP, das die Funktion hat eine Meldung bzw. Daten eines UPN-Endgeräts, in dem Beispiel des mit dem virtuellen Port Nummer 501 verbundenen Fern-Rechners PC, entsprechend zu verarbeiten.

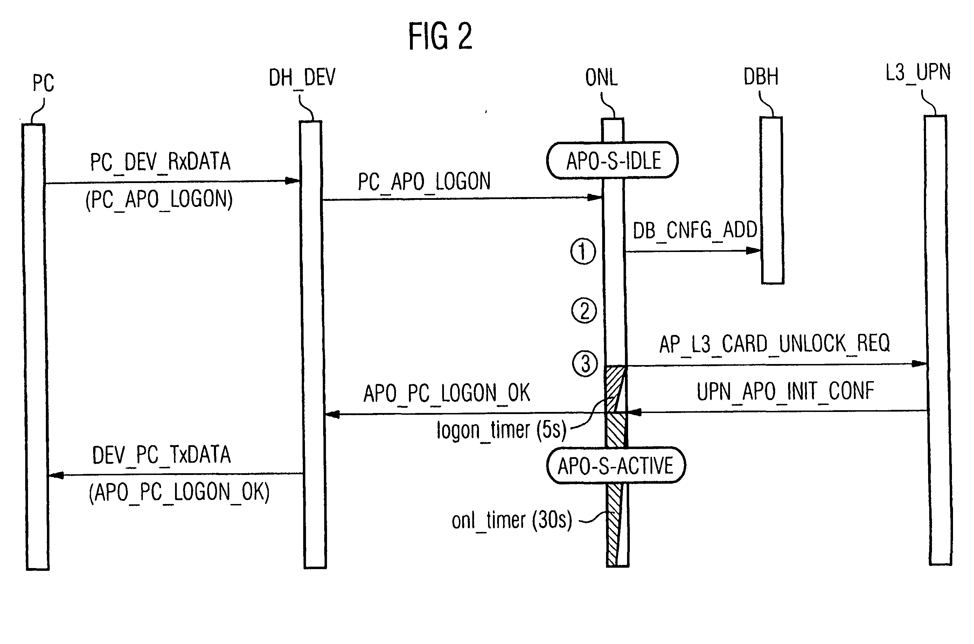

Fig. 2 zeigt den Meldungsablauf in zeitlicher Reihenfolge eines LOGON-Vorgangs des Fern-Rechners PC innerhalb der Module des Telekommunikationssystems. Mit dem Starten einer Applikation "Online" auf dem Fern-Rechner PC, die das Endgerät emuliert, setzt der Fern-Rechner PC setzt eine Meldung PC_DEV_RxDATA an das Modul DH_DEV ab, wobei die Meldung eine LOGON Anfrage beinhaltet. Der Gerätetreiber der Geräte setzt daraufhin eine Meldung PC_APO_LOGON an das Modul ONL ab, wobei in den Meldungsbezeichnungen unter APO das Modul ONL in der Komponente API zu verstehen ist. Der Zustand des Moduls ONL ist inaktiv, d.h. ein Wartezustand "idle", was durch die Systemvariable APO_S_IDLE verdeutlicht wird . Aufgrund der LOGON-Anfrage des Fern-Rechners PC macht das Modul ONL der Datenbasis DBH des Systems die Existenz einer virtuellen Karte durch die dargestellte Meldung DB_CNFG_ADD bekannt, da das System ohne Kenntnis über die virtuelle Karte keine Kommunikation mit dem Fern-Rechner PC betreiben kann. Danach setzt das Modul ONL eine Request AP_L3_CARD_UNLOCK_REQ zum Entsperren, d.h. Konfigurieren, der virtuellen Karte (Baugruppe) in dem virtuellen Slot an den Gerätetreiber L3_UPN ab. Dieser konfiguriert daraufhin die virtuelle Karte und meldet eine erfolgreiche Konfiguration über die Meldung UPN_APO_INIT_CONF an das Modul ONL zurück. Mit dem Absetzen der Initialisierungsanfrage des Moduls ONL wurde in dem Modul ONL ein erster Zeitgeber logon_timer gestartet. Sollte die erfolgreiche Initialisierungsmeldung daher nicht innerhalb einer vorgegebenen Zeit, hier beispielsweise 5 Sekunden, erfolgt sein, so wird der LOGON-Vorgang abgebrochen. Mit dem Eintreffen des erfolgreichen Initialisierungskommandos wird das Modul ONL in den aktiven Zustand versetzt, dargestellt in dem ONL-Balken durch die Systemvariable APO_S_ACTIVE, und ein zweiter Zeitgeber onl_timer gestartet, der nach einer vorgegebenen zweiten Zeit, hier beispielsweise 30 Sekunden, die Verbindung zu dem Fern-Rechner PC wieder unterbricht, wenn von dem Fern-Rechner PC keine Aktivität kommt. Das Modul ONL meldet das erfolgreiche LOGON an den Gerätetreiber DH_DEV (Meldung APO_PC_LOGON_OK), der wiederum eine Meldung DEV_PC_TxDATA an den Fern-Rechner PC über den erfolgreichen LOGON-Vorgang absetzt. Damit ist die Verbindung zwischen dem Fern-Rechner PC und dem Telekommunikationssystem zum Zweck einer Fernadministration aufgebaut.

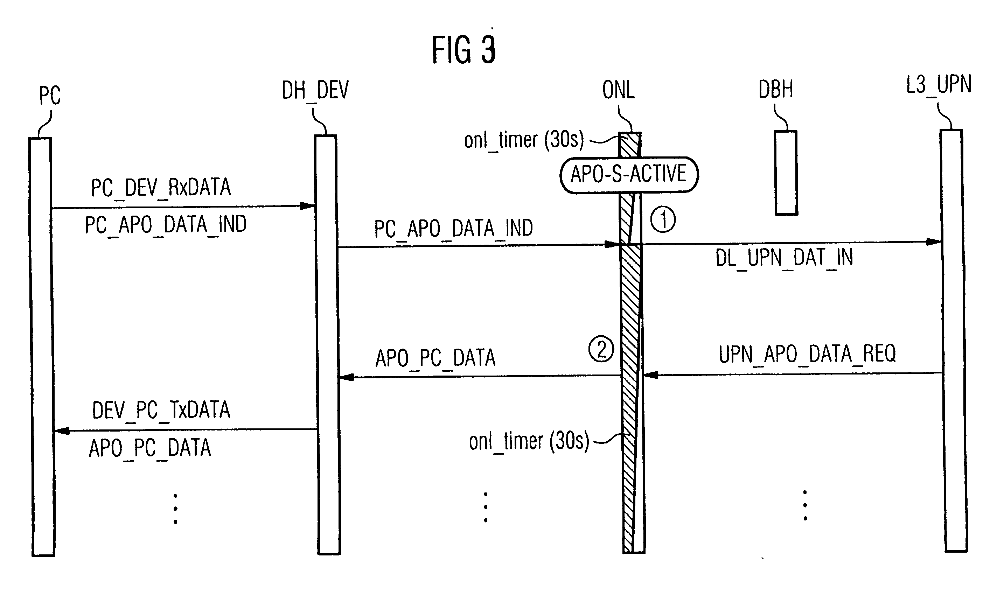

Fig. 3 zeigt in analoger Weise zu der Fig. 2 den Datenübertragungsmodus zwischen dem Fern-Rechner PC und der Schnittstelle L3_UPN, nachdem ein erfolgreiches Einloggen stattgefunden hat. Zu beachten ist, daß mit dem Einloggen des Fern-Rechner PC über den in der Fig. 2 dargestellten Vorgang an dem Fern-Rechner PC ein administratives Fernsprechgerät in dem Fern-Rechner PC emuliert wird. Entsprechend dem in der Fig. 3 gezeigten Ablaufdiagramm sendet der Fern-Rechner PC Daten an die Schnittstelle LH3_UPN und empfängt von ihr Daten, wobei mit jedem Empfang von Meldungen des Fern-Rechners PC der Zeitgeber onl_timer wieder neu initialisiert wird. Solange die Zeitbedingung des Zeitgebers onl-timer erfüllt ist, befindet sich das Modul ONL im aktiven Zustand, dargestellt durch die Systemvariable APO_S_ACTIVE. Als Antwort auf die Meldungen des Fern-Rechners PC empfängt dieser entsprechende Meldungen der Schnittstelle L3_UPN, d.h. entsprechende Menüs des Moduls USER der Fig. 1, die in der Emulation des Endgeräts auf dem Fern-Rechner dargestellt werden. Die Bezeichnungen der entsprechenden Meldungen ist der Fig. 3 zu entnehmen.

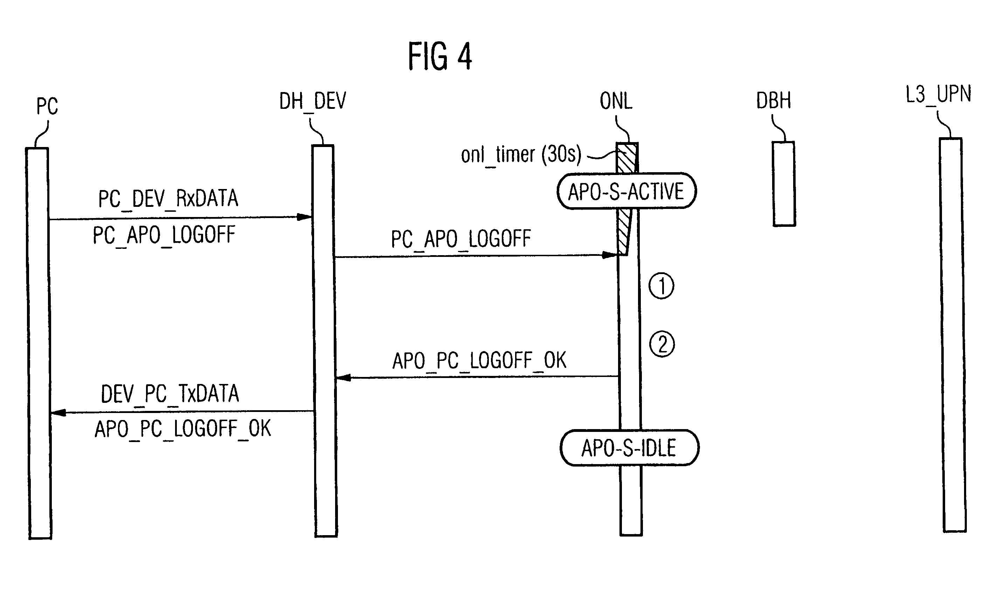

Fig. 4 zeigt das Ausloggen des Fern-Rechners PC aus dem Telekommunikationssystem. Sobald die Applikation "Online" des Fern-Rechners PC geschlossen wird, sendet der Fern-Rechner PC eine LOGOFF-Meldung an das Telekommunikationssystem, die virtuelle Karte wird wieder in der Datenbasis als inaktiv eingetragen und Pointer und Variablen reinitialisiert. Anschließend wird eine LOGOFF-Meldung an den Gerätetreiber DH_DEV und den Fern-Rechner PC gesendet und das Modul ONL geht wieder in den Wartezustand "idle" über, dargestellt durch die Systemvariable AP_S_IDLE. Die Bezeichnungen der ausgetauschten Meldungen sind der Fig. 4 zu entnehmen.

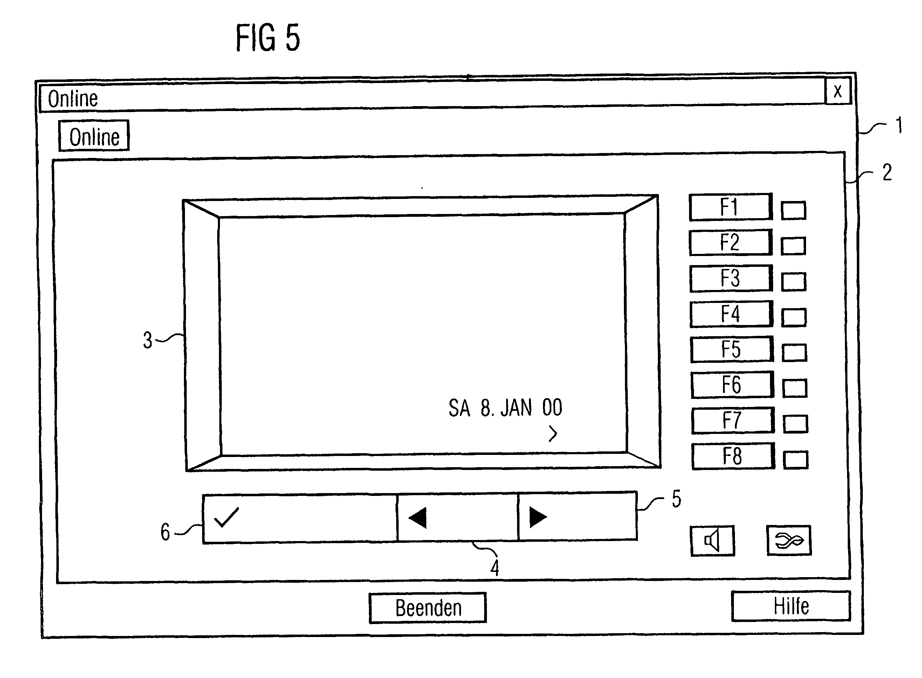

Fig. 5 zeigt das auf dem Bildschirm 1 des Fern-Rechner PC erscheinende emulierte Bild 2 eines entsprechenden administrationsberechtigten Fernsprechgeräts, was durch die Applikation "Online" bewirkt wird. Dargestellt ist in dem Windows-Fenster 2 das emulierte Display 3 des emulierten Fernsprechgeräts, dessen Befehlstasten F1 bis F8 sowie Cursortasten 4 und 5 für eine Aufwärts- und Abwärtsbewegung eines Cursors ">" in dem Display 3. Ferner ist eine Bestätigungstaste 6 des emulierten Fernsprechgeräts dargestellt. Diese dargestellten Tasten sowie die dargestellten Windows-Tasten "Online" zur Steuerung des Emulationsprogramms Online, "Beenden" und "Hilfe" sind mit der Maus des Fern-Rechners PC betätigbar und man kann die gleichen Administrationsfunktionen wie an einem reellen administrationsberechtigten Fernsprechendgerät vornehmen und die Datenbasis des Telekommunikationssystems online manipulieren und ändern.

## Patentansprüche

1. Telekommunikationssystem mit einer Fernadministration, bei dem zur Administration in einem Datenstrom Meldungen zwischen einer Anrufbehandlung (CP) des Telekommunikationssystems und zumindest einem administrationsberechtigten Endgerät ausgetauscht werden,
bei dem das Telekommunikationssystem einen Gerätetreiber (L3_UPN) für administrationsberechtigte Endgeräte aufweist, wobei der Gerätetreiber (L3_UPN) für administrationsberechtigte Endgeräte Meldungen an ein Programmodul zur Anrufbehandlung (CP) des Telekommunikationssystems absetzt und empfängt,
bei dem das Telekommunikationssystem einen weiteren Gerätetreiber (DH_DEV) für externe Schnittstellen aufweist,
**dadurch gekennzeichnet,**
**daß** es sich bei dem zumindest einen administrationsberechtigten Endgerät um ein duch Software nachgebildetes Endgerät handelt, wobei der Datenstrom zu und von dem durch Software nachgebildeten Endgerät auf einen über die externe Schnittstelle an das Telekommunikationssystem angeschlossenen Fern-Rechner (PC) umgeleitet wird, indem das Telekommunikationssystem ein Applikations-Modul (ONL) zur bidirektionalen Kommunikation zwischen dem Gerätetreiber (L3_UPN) für administrationsberechtigte Endgeräte und dem weiteren Gerätetreiber (DH_DEV)für externe Schnittstellen aufweist.

2. Telekommunikationssystem nach Anspruch 1 ,
**dadurch gekennzeichnet,**
**daß** sich das durch Software nachgebildete Endgerät an einem durch Software nachgebildeten Port befindet.

3. Telekommunikationssystem nach Anspruch 2,
**dadurch gekennzeichnet,**
**daß** der durch Software nachgebildete Port auf einer ebenso durch Software nachgebildeten Baugruppe angeordnet ist.

4. Telekommunikationssystem nach Anspruch 3,
**dadurch gekennzeichnet,**
**daß** die durch Software nachgebildete Baugruppe in einem durch Software nachgebildeten Slot steckt.

5. Telekommunikationssystem nach einem der vorangegangenen Ansprüche,
**dadurch gekennzeichnet,**
**daß** auf dem Fern-Rechner (PC) ein Meldungsinterpreter und Emulator (Online) die Oberfläche und Funktionalität des administrationsberechtigten Endgerätes realisiert.

6. Telekommunikationssystem nach einem der vorangegangenen Ansprüche,
**dadurch gekennzeichnet,**
**daß** der Meldungsverkehr zwischen dem durch Software nachgebildeten Port und dem Telekommunikationssystem zu einer Datenschnittstelle des Telekommunikationssystems umgeleitet wird.

7. Telekommunikationssystem nach einem der vorangegangenen Ansprüche,
**dadurch gekennzeichnet,**
**daß** die Datenschnittstelle des Telekommunikationssystems eine V.24-Schnittstelle, ein analoges Modem oder eine ISDN-Karte ist.

8. Telekommunikationssystem nach einem der vorangegangenen Ansprüche,
**dadurch gekennzeichnet,**
**daß** der Gerätetreiber (L3_UPN) für administrationsberechtigte Endgeräte innerhalb des Gerätetreibers (DH_PORT) der Ports der dritten OSI-Schicht des Telekommunikationssystems angeordnet ist.

9. Telekommunikationssystem nach einem der vorangegangenen Ansprüche,
**dadurch gekennzeichnet,**
**daß** das Programmmodul zur Anrufbehandlung (CP) ein Application Interface (API) aufweist, in dem das Applikations-Modul (ONL) zur bidirektionalen Kommunikation und zur Steuerung der online Verbindung mit dem Fern-Rechner (PC) zur Fernadministration enthalten ist.

10. Telekommunikationssystem nach einem der vorangegangenen Ansprüche,
**dadurch gekennzeichnet,**
**daß** das administrationsberechtigte Endgerät als UPN-Endgerät ausgeführt ist.

## Claims

1. Telecommunication system having a remote administration function, in which, for administration in a data stream, messages are exchanged between a call processing unit (CP) in the telecommunication system and at least one terminal with administration authorization,
in which the telecommunication system has a device handler (L3_UPN) for terminals with administration authorization, the device handler (L3_UPN) for terminals with administration authorization transmitting and receiving messages to/from a program module for the call processing unit (CP) in the telecommunication system,
in which the telecommunication system has a further device handler (DH_DEV) for external interfaces,
**characterized in that**
the at least one terminal with administration authorization is a terminal which is simulated by software, the data stream to and from the terminal simulated by software being diverted to a remote computer (PC) connected to the telecommunication system via the external interface by virtue of the telecommunication system having an application module (ONL) for bidirectional communication between the device handler (L3_UPN) for terminals with administration authorization and the further device handler (DH_DEV) for external interfaces.

2. Telecommunication system according to Claim 1, **characterized in that** the terminal simulated by software is located on a port simulated by software.

3. Telecommunication system according to Claim 2, **characterized in that** the port simulated by software is arranged on a unit likewise simulated by software.

4. Telecommunication system according to Claim 3, **characterized in that** the unit simulated by software is located in a slot simulated by software.

5. Telecommunication system according to one of the preceding claims, **characterized in that** a message interpreter and emulator (Online) on the remote computer (PC) provide the interface and functionality of the terminal with administration authorization.

6. Telecommunication system according to one of the preceding claims, **characterized in that** the message traffic between the port simulated by software and the telecommunication system is diverted to a data interface for the telecommunication system.

7. Telecommunication system according to one of the preceding claims, **characterized in that** the data interface for the telecommunication system is a V.24 interface, an analogue modem or an ISDN card.

8. Telecommunication system according to one of the preceding claims, **characterized in that** the device handler (L3_UPN) for terminals with administration authorization is arranged inside the device handler (DH_PORT) for the ports in the third OSI layer in the telecommunication system.

9. Telecommunication system according to one of the preceding claims, **characterized in that** the program module for the call processing unit (CP) has an application interface (API) which contains the application module (ONL) for bidirectional communication and for controlling the online connection to the remote computer (PC) for remote administration.

10. Telecommunication system according to one of the preceding claims, **characterized in that** the terminal with administration authorization is configured as a UPN terminal.

## Revendications

1. Système de télécommunication avec une gestion à distance,
dans lequel, en vue de la gestion, des messages sont échangés dans un flux de données entre un traitement d'appel (CP) du système de télécommunication et au moins un terminal autorisé à gérer,
dans lequel le système de télécommunication comporte un pilote d'appareils (L3_UPN) pour terminaux autorisés à gérer, le pilote d'appareils (L3_UPN) pour terminaux autorisés à gérer envoyant des messages à un module de programme destiné au traitement d'appel (CP) du système de télécommunication et en recevant de celui-ci,
dans lequel le système de télécommunication comporte un autre pilote d'appareils (DH_DEV) pour interfaces externes,
**caractérisé par le fait que**
le au moins un terminal autorisé à gérer est un terminal simulé par logiciel, le flux de données de et vers le terminal simulé par logiciel étant dévié sur un ordinateur distant (PC) raccordé au système de télécommunication par l'intermédiaire de l'interface externe, le système de télécommunication comportant un module d'application (ONL) pour la communication bidirectionnelle entre le pilote d'appareils (L3_UPN) pour terminaux autorisés à gérer et l'autre pilote d'appareils (DH_DEV) pour interfaces externes.

2. Système de télécommunication selon la revendication 1,
**caractérisé par le fait que**
le terminal simulé par logiciel se trouve à un port simulé par logiciel.

3. Système de télécommunication selon la revendication 2,
**caractérisé par le fait que**
le port simulé par logiciel est agencé sur un module également simulé par logiciel.

4. Système de télécommunication selon la revendication 3,
**caractérisé par le fait que**
le module simulé par logiciel est enfiché dans un logement simulé par logiciel.

5. Système de télécommunication selon l'une des revendications précédentes,
**caractérisé par le fait que**,
sur l'ordinateur distant (PC), un interpréteur de messages et émulateur (Online) réalise l'interface et la fonctionnalité du terminal autorisé à gérer.

6. Système de télécommunication selon l'une des revendications précédentes,
**caractérisé par le fait que**
la circulation de messages entre le port simulé par logiciel et le système de télécommunication est dévié vers une interface de données du système de télécommunication.

7. Système de télécommunication selon l'une des revendications précédentes,
**caractérisé par le fait que**
l'interface de données du système de télécommunication est une interface V.24, un modem analogique ou une carte RNIS.

8. Système de télécommunication selon l'une des revendications précédentes,
**caractérisé par le fait que**
le pilote d'appareils (L3_UPN) pour terminaux autorisés à gérer est agencé à l'intérieur du pilote d'appareils (DH_PORT) des ports de la troisième couche OSI du système de télécommunication.

9. Système de télécommunication selon l'une des revendications précédentes,
**caractérisé par le fait que**
le module de programme destiné au traitement d'appel (CP) comporte une interface d'application (API) qui contient le module d'application (ONL) destiné à la communication bidirectionnelle et à la commande de la liaison en direct *online* avec l'ordinateur distant (PC) destiné à la gestion à distance.

10. Système de télécommunication selon l'une des revendications précédentes,
**caractérisé par le fait que**
le terminal autorisé à gérer est conçu comme un terminal UPN.
